# EUROPEAN PATENT SPECIFICATION

(11) **EP 2 753 041 B1**
(45) Date of publication and mention of the grant of the patent: **20.12.2017**
(21) Application number: 13150312.0
(22) Date of filing: 04.01.2013
(51) Int. Cl.: H04L 29/06

(54) **Methods and server for controlling aggregation of multimedia contents based on requirements of a content producer and of user(s) of communication equipment(s)**
Verfahren und Server zur Steuerung der Aggregation von Multimediainhalten auf Grundlage von Anforderungen eines Inhaltserstellers und von Benutzern von Kommunikationsausrüstung(en)
Procédés et serveur de commande d'agrégation de contenus multimédia en fonction des exigences d'un producteur de contenu et d'utilisateur (s) d'équipement de communication (s)

(43) Date of publication of application: 09.07.2014
(73) Proprietor: ALCATEL LUCENT, 92100 Boulogne-Billancourt (FR)
(72) Inventor: Delegue, Gérard, 91620 NOZAY (FR); Durecu, Olivier, 91620 NOZAY (FR)
(74) Representative: Berthier, Karine

(56) References cited:
- WO-A1-2011/068784

## Description

### Technical field

The present invention relates to multimedia systems, and more precisely to the control by such multimedia systems of multimedia content aggregations intended to be transmitted to user communication equipments.

One means here by "communication equipment" any type of electronic equipment comprising a communication module capable of establishing connexion with at least one wired or wireless communication network to exchange data with other communication equipments. So, it may be a smartphone, a tablet, a set-top box, a residential gateway, a game console, a connected television, a laptop or a personal computer, for instance.

### Background of the invention

Multimedia systems often deliver a set of multimedia contents (such as texts, graphics, audio and videos) that may be linked to each other and possibly presented together.

To provide flexibility to users of multimedia systems, the aggregation of multimedia contents is sometimes customizable. However, this flexibility is not without consequence for a content producer. Indeed, his original message and intention can be distorted by mixing of contents of different origins and/or types. For instance, during a political debate, if the producer wants to integrate textual messages (such as tweets) to the video of the debate, his main objective is keeping the audience attention to the debate images, but not having the audience focus on the integrated textual messages.

Moreover customization of multimedia systems has limitations. Indeed, it does not allow taking into account the context of the user (or content consumer), and more precisely his desire to adapt the contents to his expectations, and the objective of the content producer who wants to maintain consistency and integrity in the aggregated multimedia contents he provides.

Several attempts have been made to improve the situation. For instance, it has been proposed a system for dynamically changing a mosaic of video channels, by means of a video router coupled to a controller. The video router is arranged for accepting video inputs from a plurality of video sources and for generating a plurality of channel mosaic configurations as outputs. Such a system has at least three drawbacks: it does not propose a model to describe the consistency between the multimedia content sources, its controller is not able to adapt the video quality to the consumer requirements, and the personalization of multimedia content sources by a consumer requires building of new channel mosaics (so, there is no tradeoff between the resources available and the consumer requirements).

The Google Company has also proposed a solution, described at the internet address "http://support.google.com/plus/bin/answer.py?hl=en&answer =1215273", and enabling to start a video chat with several persons and to mix a plurality of video streams, coming from webcams, applications or a desktop, amongst which a single one is magnified (it may be the stream concerning the video of the person speaking or the stream selected by the user). Such a system has at least two drawbacks: it does not allow a participant to deliver several multimedia contents at the same time (for instance, he cannot show a slide with his own video), and a participant cannot configure the rendering as desired (for instance, some videos of participants cannot be masked, or only one video can be magnified, or else the quality of some multimedia contents cannot be improved at the expense of other multimedia contents). Document WO2011068784, published on 09-06-2011, discloses method and apparatuses for operating a server-side proxy in a streaming data delivery system that implements secure and reliable streaming media with dynamic bit rate adaptation. So, the best existing solutions limit the possibilities to adapt the aggregation of multimedia contents and/or allow all aggregation possibilities but without any control to check the consistency between the multimedia content sources.

### Summary of the invention

So, the invention, which is defined by the caims, aims at allowing control of multimedia content aggregations in a flexible and consistent way by taking into account not only considerations of the content aggregation producer but also wishes or requirements of content consumers (or users).

To this effect the invention notably provides a method, intended for controlling aggregation of multimedia contents to be transmitted to at least one communication equipment of a user, to be executed by a multimedia server and comprising:
- obtaining a model of aggregated multimedia contents representing first requirements defined by a content aggregation producer,
- handling different sources of multimedia contents concerned by this obtained model,
- receiving, from the communication equipment, second requirements defined by its user, and
- defining an aggregated multimedia content stream corresponding to the obtained model, modified by the second requirements and taking into account at least network constraints.

The method according to the invention may include additional characteristics considered separately or combined, and notably:
- it may comprise providing the model to the communication equipment;
- the model may define at least multimedia contents that must be aggregated into the defined stream, a codec used by each source for providing a multimedia content that must be aggregated into the defined stream, possible links of aggregation between these multimedia contents, and rules for rendering these aggregated multimedia contents;
   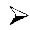 one may control ports of the server to receive multimedia content streams from the sources designated by the obtained model, and one may associate the respective defined codecs of these multimedia content streams to the corresponding ports;
- one may identify multimedia contents that can be associated together to synchronize them in a same stream container, and then one may define an aggregated multimedia content stream optimizing a bandwidth of a network used for transmitting the aggregated multimedia content stream;
- one may compute a default configuration from the obtained model, then one may transmit configuration commands corresponding to the computed default configuration to a content multiplexer, in charge of aggregating the provided multimedia contents defined by the obtained model, and to a media server, in charge of transmitting the defined aggregated multimedia content stream.
   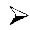 during a transmission session, one may adapt the default configuration from observations received from user communication equipment(s) and/or from new second requirements.

The invention also provides a server, intended for controlling aggregation of multimedia contents to be transmitted to at least one communication equipment of a user, and comprising:
- means for obtaining a model of aggregated multimedia contents representing first requirements defined by a content aggregation producer,
- means for handling different sources of multimedia contents concerned by this obtained model,
- means for receiving, from a communication equipment, second requirements defined by its user, and for defining an aggregated multimedia content stream corresponding to the obtained model, modified by the second requirements and taking into account at least network constraints.

For instance, this obtaining means may be arranged for creating a model defining at least multimedia contents that must be aggregated into the defined stream, a codec used by each source for providing a multimedia content that must be aggregated into the defined stream, possible links of aggregation between these multimedia contents, and rules for rendering these aggregated multimedia contents.

Also for instance, this server may comprise a content multiplexer, arranged for aggregating the provided multimedia contents defined by the obtained model, and a media server, arranged for transmitting the aggregated multimedia content stream.

The invention also provides a method, intended for controlling aggregation of multimedia contents to be received from a multimedia server, to be executed by a communication equipment of a user and comprising:
- receiving, from this multimedia server, a model of aggregated multimedia contents representing first requirements defined by a content aggregation producer,
- collecting second requirements of the user and network constraints of the network to which the user communication equipment is attached,
- comparing the collected second requirements to this received model, for carrying out modifications to this received model in function of the collected second requirements if these modifications are authorized by the received model.

For instance, this method may comprise negotiating the modifications with the multimedia server, then transmitting configuration commands corresponding to these negotiated modifications to a multimedia renderer of the user communication equipment, in charge of receiving the transmitted aggregated multimedia content stream and of rendering the multimedia contents contained into the received stream based on these configuration commands.

The invention also provides a communication equipment, intended for being used by a user, and comprising a multimedia renderer, a multimedia player and a user collecting means arranged for collecting second requirements defined by its user and network constraints of the network to which its user communication equipment is attached, then for comparing these collected second requirements to an obtained model of aggregated multimedia contents representing first requirements defined by a content aggregation producer, for carrying out modifications to the obtained model in function of the collected second requirements if these modifications are authorized by the obtained model.

For instance, this user collecting means may be arranged for negotiating modifications with a server such as the one above introduced.

### Brief description of the figures

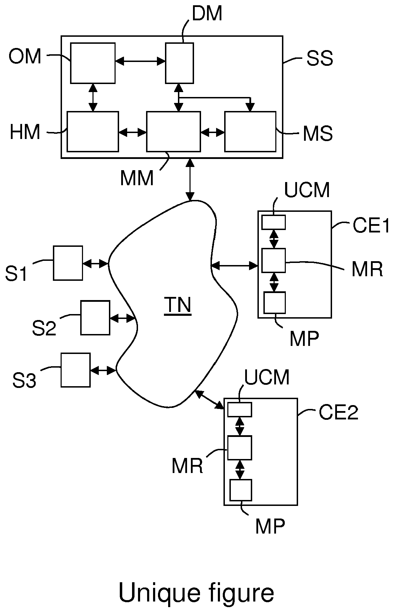

Other features and advantages of the invention will become apparent on examining the detailed specifications hereafter and the appended drawing, wherein the unique figure schematically and functionally illustrates a system according to the invention shared into user communication equipments and a server that are connected to a transport network.

### Detailed description of the preferred embodiment

The appended drawing may serve not only to complete the invention, but also to contribute to its understanding, if need be.

The invention aims, notably, at offering methods, and an associated server SS, intended for controlling aggregation of multimedia contents that must be transmitted to at least one user communication equipment CEi.

In the following description it will be considered that the user communication equipments CEi (i = 1 or 2) are personal computers. But a user communication equipment CEi may be of another type, as soon as it comprises a communication module capable of establishing connexion with at least one wired or wireless communication network to exchange data with other communication equipments. So, it may be also a smartphone, a tablet, a laptop, a set-top box, a game console, a connected television, or a residential gateway, for instance.

As illustrated in the unique figure, each user communication equipment CEi is connected to a transport network TN, that can be a combination of wired and wireless networks (or infrastructures) allowing access to the Internet (for instance). Moreover, each user communication equipment CEi comprises a multimedia renderer MR, in charge of receiving an aggregated multimedia content stream transmitted by a media server MS and of rendering the multimedia contents contained into this received stream, and a multimedia player MP intended for displaying the rendered multimedia contents.

A first method according to the invention can be executed by a server SS, such as the one illustrated in the unique figure, and comprising:
- a first phase during which one obtains a model of aggregated multimedia contents representing first requirements defined by a content aggregation producer,
- a second phase during which one handles different sources Sj of multimedia contents concerned by this obtained model,

- a third phase during which one receives, from a communication equipment CEi, second requirements defined by its user, and
- a fourth phase during which one defines an aggregated multimedia content stream corresponding to the obtained model, modified by the second requirements and taking into account at least network constraints.

To execute this first method, the server SS comprises at least an obtaining means OM, a handling means HM and a definition means DM.

The obtaining means OM is arranged for obtaining a model of aggregated multimedia contents from first requirements defined by a content aggregation producer.

For instance, a first requirement may concerns:
- the phase preceding the intervention of a speaker in a videoconference event (for instance, it may require display of N videos of people attending to a videoconference event and/or diffusion of a chosen environment music before the intervention of the speaker),
- the beginning of the intervention of a speaker in a videoconference event (for instance, it may require hiding displayed videos of people attending to a videoconference event when the speaker starts speaking in order people focus their attention on him),
- a chosen slide to be displayed during a videoconference event (for instance, it may require display of a video in which he appears in addition with a chosen slide),
- the audio diffusion of the speech of a speaker in a videoconference event (for instance, it may require that the audio diffusion of his speech be not suppressed when the video in which he appears does not belong to a multimedia content aggregation),
- a chosen part of the intervention of a speaker in a videoconference event (for instance, it may require display of people reacting during a speech),
- a constraint (for instance, it may require to do not display in the same time chosen multimedia contents such as a slide and a registered video, or to do not display in the same time more than M videos multimedia contents of people attending to a videoconference event, or else to do not diffuse in the same time more than P audio streams),
- a flexibility for a person attending to a videoconference event compared with a wish of the speaker (for instance, it may authorize a person attending to a videoconference event to listen to the audio streams of some other persons during the intervention of the speaker, or modification(s) of a default multimedia content aggregation in order to display only a chosen video stream or a chosen slide, or else a person attending to a videoconference event to zoom on some chosen videos).

So, an obtained model may define, for instance:
- a videoconference event with the video of the speaker,
- slides displayed during this videoconference event,
- registered videos intended for illustrating purposes of the speaker,
- videos of people attending to the videoconference event,
- an environment music to make people waiting for the beginning of the videoconference event.

The obtaining means OM may obtain a model from an external equipment, or it may create a model.

This obtaining means OM is preferably made of a combination of hardware modules (or electronic circuit(s)) or and software modules. But it could be also made only of software modules. In this last case it can be stored in a memory.

The handling means HM is arranged for handling different sources Sj of multimedia contents concerned by the obtained model, respectively coupled to some of its ports, and for instance accessible through the transport network TN. For instance, a first source S1 (j = 1) may provide video contents, a second source S2 (j = 2) may provide audio contents, and a third source S3 (j = 3) may provide textual contents and/or graphic contents.

The definition means DM is arranged for defining an aggregated multimedia content stream corresponding to the obtained model, modified by second requirements of one or more users and taking into account at least network constraints.

The definition means DM is preferably made of a combination of hardware modules (or electronic circuit(s)) or and software modules. But it could be also made only of software modules. In this last case it can be stored in a memory.

The second requirements are provided by the communication equipment CEi of a user. To this effect, each user communication equipment CEi comprises a user collecting means UCM arranged for collecting second requirements defined by its user.

In fact, the user communication equipment CEi may execute a second method according to the invention, comprising:
- receiving, from the multimedia server SS, the model of aggregated multimedia contents representing the first requirements defined by the content aggregation producer,
- collecting these second requirements of the user and network constraints of the network to which the user communication equipment CEi is attached, and
- comparing the collected second requirements to the received model, for carrying out modifications to this received model in function of these collected second requirements if these modifications are authorized by the received model.

For instance, a second requirement may be a wish to start or stop a chosen multimedia content, or a wish to resize a video, or a wish to change the volume or mute an audio stream, or a wish to have slides in high definition (because he is involved in a video conference and that the bandwidth assigned to his communication equipment CEi allows it) while the main speaker of the video conference occupies half of the window next to the slides.

Each user collecting means UCM is preferably made of a combination of hardware modules (or electronic circuit(s)) or and software modules. But it could be also made only of software modules. In this last case it can be stored in a memory.

It is important to note that the server SS comprises a content multiplexer MM, that is in charge of aggregating the multimedia contents, provided by the handling means HM and defined by the obtained model, after having been configured by configuration commands, and a media server MS, that is in charge of transmitting these aggregated multimedia content into a stream defined by the definition means DM after having been configured by configuration commands, and intended for one or more chosen user communication equipments CEi. These configuration commands are determined and transmitted by the definition means DM, preferably from a default configuration that it had computed by the definition means DM from the obtained model (provided by the obtaining means OM).

For instance, the definition means DM may be further arranged for adapting the default configuration, during a transmission session, from observations and/or new second requirements originating from one or more user communication equipments CEi.

Also for instance, the definition means DM may be arranged for identifying multimedia contents that can be associated together (before being aggregated) to synchronized them in a same stream container and then for defining the aggregated multimedia content stream so that it optimizes the bandwidth of the network that is used by the media server MS for transmitting the aggregated multimedia content stream. In fact, the definition means DM may propose different mosaics (or aggregations) with different characteristics than those requested by user(s) in order to minimize the number of mosaics (or aggregates) to build and so to minimize the CPU load of the server SS.

Also for instance, the obtained model may define at least the multimedia contents that must be aggregated into the stream defined by the definition means DM and notably their types (video, audio, RSS flow, text, graphics), the (video or audio) codec that is used by each source Sj for providing a multimedia content that must be aggregated into the stream defined by the definition means DM, possible links of aggregation between these multimedia contents depending on their relations (for instance mandatory content(s) with one or more other content(s)), and rules for rendering these aggregated multimedia contents (for instance minimum/maximum size, or audio constraints).

In this case, the handling means HM may be arranged for controlling its ports to receive multimedia content streams from the sources Sj designated by the obtained model (provided by the obtaining means OM), and for associating the respective codecs of these multimedia content streams (defined by this obtained model) to its corresponding ports.

Each user collecting means UCM may be arranged for collecting the second requirements of its user (through his communication equipment CEi) and network constraints of the network to which this communication equipment CEi is attached, then for comparing these collected second requirements to the obtained model (provided by the obtaining means OM), in order to carry out modifications to this obtained model in function of these collected second requirements if these modifications are authorized by the obtained model.

In this case, each user collecting means UCM may be arranged for negotiating the modifications requested by its user with the definition means DM, then for transmitting configuration commands corresponding to the negotiated modifications to a multimedia renderer MR of the communication equipment CEi of this user, which is in charge of receiving the aggregated multimedia content stream transmitted by the media server MS and of rendering the multimedia contents contained into this received stream based on these configuration commands, before transmitting rendered multimedia contents to the multimedia player MP of its user communication equipment CEi.

During a negotiation (which may be a part of the second method), the definition means DM may propose other media quality levels than those requested by a user collecting means UCM for a given multimedia content in order to minimize the number of different quality levels configured on the media server MS.

Thanks to the invention users of communication equipments can personalize an aggregation of multimedia contents proposed by a producer, while the latter can control the consistency of this aggregation.

The invention is not limited to the embodiments of server, communication equipment and methods described above, only as examples, but it encompasses all alternative embodiments which may be considered by one skilled in the art within the scope of the claims hereafter.

## Claims

1. Method for controlling aggregation of multimedia contents to be transmitted to at least one communication equipment (CEi) of a user, said method being executed by a multimedia server (SS) and comprising:
- obtaining a model of aggregated multimedia contents, said obtained model defining at least multimedia contents that must be aggregated into the defined stream and further defining at least a codec used by each source (Sj) for providing a multimedia content that must be aggregated into the defined stream, possible links of aggregation between these multimedia contents, and rules for rendering these aggregated multimedia contents and representing first requirements defined by a content aggregation producer,
- handling different sources (Sj) of multimedia contents concerned by said obtained model, by controlling ports of said server (SS) for receiving multimedia content streams from said sources (Sj) designated by said obtained model,
- receiving, from said communication equipment (CEi), second requirements defined by said user and destined to modify said obtained model,
- defining an aggregated multimedia content stream corresponding to said obtained model, modified by said second requirements and taking into account at least network constraints.

2. Method according to claim 1, comprising providing said model to said communication equipment (CEi).

3. Method according to claim 2, wherein the step of handling different sources (Sj) further comprises associating said respective defined codecs of these multimedia content streams to the corresponding ports.

4. Method according to one of claims 1 to 3, comprising identifying multimedia contents that can be associated together to synchronize them in a same stream container, and then defining an aggregated multimedia content stream optimizing a bandwidth of a network used for transmitting said aggregated multimedia content stream.

5. Method according to one of claims 1 to 4, comprising computing a default configuration from said obtained model, then transmitting configuration commands corresponding to said computed default configuration to a content multiplexer (MM), in charge of aggregating the provided multimedia contents defined by said obtained model, and to a media server (MS), in charge of transmitting said defined aggregated multimedia content stream.

6. Method according to claim 5, comprising, during a transmission session, adapting said default configuration from observations received from user communication equipment(s) (CEi) and/or from new second requirements.

7. Method according to one of claims 1 to 6, wherein the second requirements correspond to a wish to start or stop a chosen multimedia content, a wish to resize a video, or a wish to change the volume or mute an audio stream.

8. Server (SS) for controlling aggregation of multimedia contents to be transmitted to at least one communication equipment (CEi) of a user, comprising:
- means (OM) for obtaining a model of aggregated multimedia contents, said obtained model defining at least multimedia contents that must be aggregated into the defined stream and further defining at least a codec used by each source (Sj) for providing a multimedia content that must be aggregated into the defined stream, possible links of aggregation between these multimedia contents, and rules for rendering these aggregated multimedia contents and representing first requirements defined by a content aggregation producer,
- means (HM) for handling different sources (Sj) of multimedia contents concerned by said obtained model, by controlling ports of said server (SS) for receiving multimedia content streams from said sources (Sj) designated by said obtained model,
- means (DM) for receiving, from said communication equipment (CEi), second requirements defined by said user and destined to modify said obtained model, and for defining an aggregated multimedia content stream corresponding to said obtained model, modified by said second requirements and taking into account at least network constraints.

9. Server according to claim 8, wherein it comprises i) a content multiplexer (MM) arranged for aggregating the provided multimedia contents defined by said obtained model, and ii) a media server (MS) arranged for transmitting said aggregated multimedia content stream.

10. Method for controlling aggregation of multimedia contents to be received from a multimedia server (SS), said method being executed by a communication equipment (CEi) of a user and comprising:
- receiving, from said multimedia server (SS), a model of aggregated multimedia contents, said received model defining at least multimedia contents that must be aggregated into the defined stream and further defining at least a codec used by each source (Sj) for providing a multimedia content that must be aggregated into the defined stream, possible links of aggregation between these multimedia contents, and rules for rendering these aggregated multimedia contents and representing first requirements defined by a content aggregation producer,
- collecting second requirements of said user and network constraints of the network to which said user communication equipment (CEi) is attached,
- comparing the collected second requirements to said received model, for carrying out modifications to said received model in function of said collected second requirements if these modifications are authorized by said received model.

11. Method according to claim 10, comprising negotiating said modifications with said multimedia server (SS), then transmitting configuration commands corresponding to said negotiated modifications to a multimedia renderer (MR) of said user communication equipment (CEi), in charge of receiving said transmitted aggregated multimedia content stream and of rendering the multimedia contents contained into said received stream based on said configuration commands.

12. Method according to one of claims 10 and 11, wherein the second requirements correspond to a wish to start or stop a chosen multimedia content, a wish to resize a video, or a wish to change the volume or mute an audio stream.

13. Communication equipment (CEi) to be used by a user, wherein it comprises a multimedia renderer (MR), a multimedia player (MP), and a user collecting means (UCM) arranged for collecting second requirements defined by said user and network constraints of the network to which said user communication equipment (CEi) is attached, then for comparing these collected second requirements to an obtained model of aggregated multimedia contents, said obtained model defining at least multimedia contents that must be aggregated into the defined stream and further defining at least a codec used by each source (Sj) for providing a multimedia content that must be aggregated into the defined stream, possible links of aggregation between these multimedia contents, and rules for rendering these aggregated multimedia contents and representing first requirements defined by a content aggregation producer, for carrying out modifications to said obtained model in function of said collected second requirements if these modifications are authorized by said obtained model.

14. Communication equipment according to claim 13, wherein said user collecting means (UCM) is arranged for negotiating said modifications with a server (SS) according to one of claims 8 and 9.

## Patentansprüche

1. Verfahren zum Steuern der Aggregation von Multimediainhalten, die übertragen werden sollen auf mindestens eine Kommunikationseinrichtung (CEi) eines Nutzers, wobei besagtes Verfahren von einem Multimedia-Server (SS) ausgeführt wird und umfasst:
- Erhalten eines Modells aggregierter Multimedia-Inhalte, wobei besagtes erhaltenes Modell mindestens Multimedia-Inhalte definiert, die in den definierten Stream aggregiert werden müssen, und weiterhin definiert mindestens einen Codec, der für jede Quelle (Sj) verwendet wird zum Bereitstellen eines Multimedia-Inhalts, der in den definierten Stream aggregiert werden muss, von möglichen Aggregationslinks zwischen diesen Multimedia-Inhalten und von Regeln zum Wiedergeben dieser aggregierten Multimedia-Inhalten und zum Darstellen erster Anforderungen, die von einem Inhalt-Aggregations-Producer definiert werden,
- Handhaben verschiedener Quellen (Sj) von Multimedia-Inhalten, die von besagtem erhaltenen Modell betroffen werden, durch Steuern von Ports besagten Servers (SS) zum Empfangen von Multimedia-Inhalt-Streams von besagten Quellen (Sj), die von besagtem erhaltenen Modell zugewiesen werden,
- Empfangen, von besagter Kommunikationseinrichtung (CEi), zweiter Anforderungen, die von besagtem Nutzer definiert sind und dazu bestimmt sind, besagtes erhaltenes Modell zu modifizieren,
- Definieren eines aggregierten Multimedia-Inhalt-Streams, der besagtem erhaltenen Modell entspricht und von besagten zweiten Anforderungen modifiziert worden ist, und Berücksichtigen mindestens der Netzwerkbeschränkungen.

2. Verfahren nach Anspruch 1, umfassend das Bereitstellen besagten Modells für besagte Kommunikationseinrichtung (CEi).

3. Verfahren nach Anspruch 2, wobei der Schritt des Handhabens verschiedener Quellen (Sj) weiterhin umfasst das Verbinden besagter entsprechend definierter Codecs dieser Multimedia-Inhalt-Streams mit den entsprechenden Ports.

4. Verfahren nach einem der Ansprüche 1 bis 3, umfassend das Identifizieren von Multimedia-Inhalten, die miteinander verbunden werden können, um sie in demselben Stream-Container zu synchronisieren, und danach Definieren eines aggregierten Multimedia-Inhalt-Streams unter Optimieren einer Netzwerkbandweite, die verwendet wird zum Übertragen besagten aggregierten Multimedia-Inhalt-Streams.

5. Verfahren nach einem der Ansprüche 1 bis 4, umfassend das Berechnen einer Standardkonfiguration aus besagtem erhaltenen Modell, danach Übertragen von Konfigurationsbefehlen, die besagter berechneter Standardkonfiguration entsprechen, an einen Inhalt-Multiplexer (MM), der zuständig ist für die Aggregation der bereitgestellten Multimedia-Inhalte, die von besagtem erhaltenen Modell definiert werden, und an einen Medienserver (MS), der zuständig ist für das Übertragen besagten definierten aggregierten Multimedia-Inhalt-Streams.

6. Verfahren nach Anspruch 5, umfassend, während einer Übertragungssitzung, das Anpassen besagter Standardkonfiguration aus Beobachtungen, die von (einer) Nutzerkommunikationseinrichtung(en) (CEi) und/oder von neuen zweiten Anforderungen empfangen werden.

7. Verfahren nach einem der Ansprüche 1 bis 6, wobei die zweiten Anforderungen dem Wunsch entsprechen, einen ausgewählten Multimedia-Inhalt zu starten oder zu stoppen, die Größe eines Videos zu ändern oder die Lautstärke eines Audio-Streams zu ändern oder stummzuschalten.

8. Server (SS) zum Steuern der Aggregation von Multimedia-Inhalten, die auf mindestens eine Kommunikationseinrichtung (CEi) eines Nutzers übertragen werden sollen, umfassend:
- Mittel (OM) zum Erhalten eines Modells aggregierter Multimedia-Inhalte, wobei besagtes erhaltenes Modell mindestens Multimedia-Inhalte definiert, die in den definierten Stream aggregiert werden müssen und weiterhin definiert mindestens einen Codec, der für jede Quelle (Sj) verwendet wird zum Bereitstellen eines Multimedia-Inhalts, der in den definierten Stream aggregiert werden muss, von möglichen Aggregationslinks zwischen diesen Multimedia-Inhalten und von Regeln zum Wiedergeben dieser aggregierten Multimedia-Inhalten und zum Darstellen erster Anforderungen, die von einem Inhalt-Aggregations-Producer definiert werden,
- Mittel (HM) zum Handhaben verschiedener Quellen (Sj) von Multimedia-Inhalten, die von besagtem erhaltenen Modell betroffen werden, durch Steuern von Ports besagten Servers (SS) zum Empfangen von Multimedia-Inhalt-Streams von besagten Quellen (Sj), die von besagtem erhaltenen Modell zugewiesen werden,
- Mittel (DM) zum Empfangen, von besagter Kommunikationseinrichtung (CEi), zweiter Anforderungen, die von besagtem Nutzer definiert sind und dazu bestimmt sind, besagtes erhaltenes Modell zu modifizieren, und zum Definieren eines aggregierten Multimedia-Inhalt-Streams, der besagtem erhaltenen Modell entspricht und von besagten zweiten Anforderungen modifiziert worden ist, und Berücksichtigen mindestens der Netzwerkbeschränkungen.

9. Server nach Anspruch 8, wobei er umfasst i) einen Inhalt-Multiplexer (MM), der angeordnet ist zum Aggregieren der bereitgestellten Multimedia-Inhalte, die von besagtem erhaltenen Modell erhalten werden, und ii) einen Medienserver (MS), der angeordnet ist zum Übertragen besagten aggregierten Multimedia-Inhalt-Streams.

10. Verfahren zum Steuern der Aggregation von Multimedia-Inhalten, die von einem Multimedia-Server (SS) empfangen werden, wobei besagtes Verfahren von einer Kommunikationseinrichtung (CEi) eines Nutzers ausgeführt wird und umfasst:
- Empfangen, von besagtem Multimedia-Server (SS), eines Modells aggregierter Multimedia-Inhalte, wobei besagtes erhaltenes Modell mindestens Multimedia-Inhalte definiert, die in den definierten Stream aggregiert werden müssen und weiterhin definiert mindestens einen Codec, der für jede Quelle (Sj) verwendet wird zum Bereitstellen eines Multimedia-Inhalts, der in den definierten Stream aggregiert werden muss, von möglichen Aggregationslinks zwischen diesen Multimedia-Inhalten und von Regeln zum Wiedergeben dieser aggregierten Multimedia-Inhalten und zum Darstellen erster Anforderungen, die von einem Inhalt-Aggregations-Producer definiert werden,
- Sammeln zweiter Anforderungen von besagtem Nutzer und von Netzwerkbeschränkungen des Netzwerks, an welchem besagte Nutzerkommunikationseinrichtung (CEi) angebracht ist,
- Vergleichen der gesammelten zweiten Anforderungen mit besagtem empfangenen Modell zum Ausführen von Modifizierungen an besagtem empfangenen Modell als Funktion besagter gesammelter zweiter Anforderungen, wenn diese Modifizierungen von besagtem empfangenen Modell autorisiert werden.

11. Verfahren nach Anspruch 10, umfassend das Verhandeln besagter Modifizierungen mit besagtem Multimedia-Server (SS), danach Übertragen der Konfigurationsbefehle, die besagten verhandelten Modifizierungen entsprechen, an einen Multimedia-Renderer (MR) von besagter Nutzerkommunikationseinrichtung (CEi), die zuständig ist für das Empfangen besagten übertragenen aggregierten Multimedia-Inhalt-Streams und für das Wiedergeben der Multimedia-Inhalte, die in besagtem empfangenen Stream enthalten sind, auf Grundlage besagter Konfigurationsbefehle.

12. Verfahren nach einem der Ansprüche 10 und 11, wobei die zweiten Anforderungen dem Wunsch entsprechen, einen ausgewählten Multimedia-Inhalt zu starten oder zu stoppen, die Größe eines Videos zu ändern oder die Lautstärke eines Audio-Streams zu ändern oder stummzuschalten.

13. Kommunikationseinrichtung (CEi), die von einem Nutzer verwendet wird, wobei sie umfasst einen Multimedia-Renderer (MR), einen Multimedia-Player (MP) und ein Nutzer-Sammel-Mittel (UCM), das ausgelegt ist zum Sammeln zweiter Anforderungen, die von besagtem Nutzer definiert sind, und von Netzwerkbeschränkungen des Netzwerks, an welchem besagte Nutzerkommunikationseinrichtung (CEi) angebracht ist, dann, zum Vergleichen dieser gesammelten zweiten Anforderungen mit einem erhaltenen Modell von aggregierten Multimedia-Inhalten, wobei besagtes erhaltenes Modell, das mindestens Multimedia-Inhalte definiert, die in den definierten Stream aggregiert werden müssen, weiterhin mindestens einen Codec definiert, der von jeder Quelle (Sj) verwendet wird, zum Bereitstellen eines Multimedia-Inhalts, der in den definierten Stream aggregiert werden muss, von möglichen Aggregationslinks zwischen diesen Multimedia-Inhalten und von Regeln zum Wiedergeben dieser aggregierten Multimedia-Inhalten und zum Darstellen erster Anforderungen, die von einem Inhalt-Aggregations-Producer definiert werden, zum Durchführen von Modifizierungen an besagtem erhaltenen Modell als Funktion besagter gesammelter zweiter Anforderungen, wenn diese Modifizierungen von besagtem erhaltenen Modell autorisiert sind.

14. Kommunikationseinrichtung nach Anspruch 13, wobei besagtes Nutzer-Sammel-Mittel (UCM) ausgelegt ist zum Verhandeln besagter Modifizierungen mit einem Server (SS) nach einem der Ansprüche 8 und 9.

## Revendications

1. Procédé de contrôle d'agrégation de contenus multimédia à transmettre à au moins un équipement de communication (CEi) d'un utilisateur, ledit procédé étant exécuté par un serveur multimédia (SS) et comprenant les étapes suivantes :
- obtenir un modèle de contenus multimédias agrégés, ledit modèle obtenu définissant au moins des contenus multimédias qui doivent être agrégés dans le flux défini et définissant en outre au moins un codec utilisé par chaque source (Sj) pour fournir un contenu multimédia qui doit être agrégé dans le flux défini, des liaisons possibles d'agrégation entre ces contenus multimédias, et des règles pour obtenir un rendu de ces contenus multimédias agrégés et pour représenter des premières exigences définies par un producteur d'agrégation de contenus,
- traiter différentes sources (Sj) de contenus multimédias concernés par ledit modèle obtenu, en contrôlant des ports dudit serveur (SS) pour recevoir des flux de contenus multimédias provenant desdites sources (Sj) désignées par ledit modèle obtenu,
- recevoir, à partir dudit équipement de communication (CEi), des deuxièmes exigences définies par ledit utilisateur et destinées à modifier ledit modèle obtenu,
- définir un flux de contenus multimédias agrégés correspondant audit modèle obtenu, modifié par lesdites deuxièmes exigences et tenant compte au moins des contraintes de réseau.

2. Procédé selon la revendication 1, consistant à fournir ledit modèle audit équipement de communication (CEi).

3. Procédé selon la revendication 2, dans lequel l'étape de traitement de différentes sources (Sj) comprend en outre l'association desdits codecs définis respectifs de ces flux de contenus multimédias aux ports correspondants.

4. Procédé selon l'une des revendications 1 à 3, comprenant l'identification de contenus multimédia qui peuvent être associés ensemble pour les synchroniser dans un même conteneur de flux, puis la définition d'un flux de contenus multimédias agrégés optimisant une bande passante d'un réseau utilisé pour transmettre ledit flux de contenus multimédias agrégés.

5. Procédé selon l'une des revendications 1 à 4, comprenant le calcul d'une configuration par défaut à partir dudit modèle obtenu, puis la transmission des commandes de configuration correspondant à ladite configuration par défaut calculée à un multiplexeur de contenus (MM), en charge d'agréger les contenus multimédias fournis définis par ledit modèle obtenu, et à un serveur multimédia (MS), en charge de transmettre ledit flux de contenus multimédias agrégés défini.

6. Procédé selon la revendication 5, comprenant, durant une session de transmission, l'adaptation de ladite configuration par défaut à partir d'observations provenant d'un ou de plusieurs équipement(s) de communication utilisateur (CEi) et/ou à partir de nouvelles deuxièmes exigences.

7. Procédé selon l'une des revendications 1 à 6, dans lequel les deuxièmes exigences correspondent à une volonté de démarrer ou d'arrêter un contenu multimédia choisi, une volonté de redimensionner une vidéo, ou une volonté de modifier le volume ou de couper le son d'un flux audio.

8. Serveur (SS) de contrôle d'agrégation de contenus multimédias à transmettre à au moins un équipement de communication (CEi) d'un utilisateur, comprenant :
- des moyens (OM) pour obtenir un modèle de contenus multimédias agrégés, ledit modèle obtenu définissant au moins des contenus multimédias qui doivent être agrégés dans le flux défini et définissant en outre au moins un codec utilisé par chaque source (Sj) pour fournir un contenu multimédia qui doit être agrégé dans le flux défini, des liaisons possibles d'agrégation entre ces contenus multimédias, et des règles pour obtenir un rendu de ces contenus multimédias agrégés et pour représenter des premières exigences définies par un producteur d'agrégation de contenus,
- des moyens (HM) pour traiter différentes sources (Sj) de contenus multimédias concernés par ledit modèle obtenu, en contrôlant des ports dudit serveur (SS) pour recevoir des flux de contenus multimédias provenant desdites sources (Sj) désignées par ledit modèle obtenu,
- des moyens (DM) pour recevoir, à partir dudit équipement de communication (CEi), des deuxièmes exigences définies par ledit utilisateur et destinées à modifier ledit modèle obtenu, et pour définir un flux de contenus multimédias agrégés correspondant audit modèle obtenu, modifié par lesdites deuxièmes exigences et tenant compte au moins des contraintes de réseau.

9. Serveur selon la revendication 8, comprenant i) un multiplexeur de contenus (MM) conçu pour agréger les contenus multimédias fournis définis par ledit modèle obtenu, et ii) un serveur multimédia (MS) conçu pour transmettre ledit flux de contenus multimédias agrégés.

10. Procédé de contrôle d'agrégation de contenus multimédia devant provenir d'un serveur multimédia (SS), ledit procédé étant exécuté par un équipement de communication (CEi) d'un utilisateur et comprenant les étapes suivantes :
- recevoir, à partir dudit serveur multimédia (SS), un modèle de contenus multimédias agrégés, ledit modèle reçu définissant au moins des contenus multimédias qui doivent être agrégés dans le flux défini et définissant en outre au moins un codec utilisé par chaque source (Sj) pour fournir un contenu multimédia qui doit être agrégé dans le flux défini, des liaisons possibles d'agrégation entre ces contenus multimédias, et des règles pour obtenir un rendu de ces contenus multimédias agrégés et pour représenter des premières exigences définies par un producteur d'agrégation de contenus,
- collecter des deuxièmes exigences dudit utilisateur et des contraintes de réseau du réseau auquel ledit équipement de communication utilisateur (CEi) est rattaché,
- comparer les deuxièmes exigences collectées audit modèle reçu, pour apporter des modifications audit modèle reçu en fonction desdites deuxièmes exigences collectées si ces modifications sont autorisées par ledit modèle reçu.

11. Procédé selon la revendication 10, comprenant la négociation desdites modifications avec ledit serveur multimédia (SS), puis la transmission de commandes de configuration correspondant auxdites modifications négociées à un moteur de rendu multimédia (MR) dudit équipement de communication utilisateur (CEi), en charge de recevoir ledit flux de contenus multimédias agrégés transmis et d'obtenir un rendu des contenus multimédias contenus dans ledit flux reçu sur la base desdites commandes de configuration.

12. Procédé selon l'une des revendications 10 et 11, dans lequel les deuxièmes exigences correspondent à une volonté de démarrer ou d'arrêter un contenu multimédia choisi, une volonté de redimensionner une vidéo, ou une volonté de modifier le volume ou de couper le son d'un flux audio.

13. Équipement de communication (CEi) devant être utilisé par un utilisateur, comprenant un moteur de rendu multimédia (MR), un lecteur multimédia (MP), et des moyens de collecte utilisateur (UCM) conçus pour collecter des deuxièmes exigences définies par ledit utilisateur et des contraintes de réseau du réseau auquel ledit équipement de communication utilisateur (CEi) est rattaché, puis pour comparer ces deuxièmes exigences collectées à un modèle obtenu de contenus multimédias agrégés, ledit modèle obtenu définissant au moins des contenus multimédias qui doivent être agrégés dans le flux défini et définissant en outre au moins un codec utilisé par chaque source (Sj) pour fournir un contenu multimédia qui doit être agrégé dans le flux défini, des liaisons possibles d'agrégation entre ces contenus multimédias, et des règles pour obtenir un rendu de ces contenus multimédias agrégés et pour représenter des premières exigences définies par un producteur d'agrégation de contenus, pour apporter des modifications audit modèle obtenu en fonction desdites deuxièmes exigences collectées si ces modifications sont autorisées par ledit modèle obtenu.

14. Équipement de communication selon la revendication 13, dans lequel lesdits moyens de collecte utilisateur (UCM) sont conçus pour négocier lesdites modifications avec un serveur (SS) selon l'une des revendications 8 et 9.
